# EUROPÄISCHE PATENTANMELDUNG

(11) **EP 3 252 308 A1**
(43) Veröffentlichungstag der Anmeldung: **06.12.2017**
(21) Anmeldenummer: 17173752.1
(22) Anmeldetag: 31.05.2017
(51) Int. Cl.: F04B 39/04, F04B 43/00, F04B 43/067

(54) **DRUCKÜBERWACHUNGSEINRICHTUNG**

(30) Priorität: 01.06.2016 DE 102016110136
(71) Anmelder: Andreas Hofer Hochdrucktechnik GmbH, 45478 Mülheim an der Ruhr (DE)
(72) Erfinder: Dehnen, Manfred, 45307 Essen (DE)
(74) Vertreter: Gesthuysen Patent- und Rechtsanwälte

(57) **Zusammenfassung**

Beschrieben und dargestellt ist eine Drucküberwachungseinrichtung (1), insbesondere für einen Membrankompressor (2), mit mindestens einem Druckaufnehmer (3) zum Aufnehmen des Drucks innerhalb eines bestimmten Volumens (4), mit mindestens einem Rückschlagventil (5) und mit mindestens einem Sperrventil (6), zum Sperren des Rückschlagventils (5), wobei sich das Sperrventil (6) und das Rückschlagventil (5) jeweils in einem von einem Medium durchströmbaren Strömungspfad (7) zwischen dem Volumen (4) und dem Druckaufnehmer (3) befinden.

Eine Drucküberwachungseinheit (1), die genaue Messwerte liefert und dennoch kostensparend realisiert werden kann wird dadurch ermöglicht, dass mindestens zwei Rückschlagventile (5,10) vorhanden sind, die antiparallel in jeweils einem Strömungspfad (7,12) angeordnet sind, wobei das erste Rückschlagventil (5) in Strömungsrichtung vom Volumen (4) zum Druckaufnehmer (3) und das zweite Rückschlagventil (10) in Strömungsrichtung vom Druckaufnehmer (3) zum Volumen (4) sperrt, und dass mindestens zwei Sperrventile (6,11) zum Sperren jeweils eines Strömungspfades (7,12) angeordnet sind.

## Beschreibung

Die Erfindung betrifft eine Drucküberwachungseinrichtung, insbesondere für einen Kompressor, mit mindestens einem Druckaufnehmer zum Aufnehmen des Drucks innerhalb eines bestimmten Volumens, mit mindestens einem Rückschlagventil und mit mindestens einem Sperrventil, zum Sperren des Rückschlagventils, wobei sich das Sperrventil und das Rückschlagventil jeweils in einem von einem Medium durchströmbaren Strömungspfad zwischen dem Volumen und dem Druckaufnehmer befinden.

Drucküberwachungseinrichtungen sind aus dem Stand der Technik bekannt und werden vielfach eingesetzt. In vielen technischen Gebieten werden beispielsweise reine Gase benötigt, die als Produkt verkauft oder zu anderen Zwecken in Industrieanlagen verwendet werden. Derartige technische Gase, zum Beispiel Kühlgase, werden in einem ständigen Kreislauf geführt, um zum einen ein wirtschaftliches Betreiben einer Industrieanlage zu ermöglichen und zum anderen die Gase an den entscheidenden Punkten im Prozess zur Verfügung zu stellen. Um den Transport der Gase oder Flüssigkeiten zu ermöglichen, werden diese in der Regel mit Kompressoren oder Pumpen gefördert. Dabei können insbesondere Gase durch Schmiermittel oder andere Stoffe verunreinigt werden. Um eine Verunreinigung zu vermeiden, werden daher meist Membrankompressoren oder Membranpumpen zur Förderung der Gase eingesetzt.

Membrankompressoren arbeiten ähnlich wie Kolbenkompressoren, jedoch mit einer trennenden Membrane zwischen der Gasseite und der Ölseite. Auf der Gasseite sind Gassaug- und Druckventile angeordnet. Auf der Ölseite befinden sich, wie beim Kolbenkompressor, Zylinder und Kolben. Beim Einfahren des Kolbens verdrängt der Kolben ein bestimmtes Volumen im Ölraum. Die dadurch resultierende Druckerhöhung wirkt sich auf die Membrane aus, die ausgelenkt wird. Durch Auslenken der Membran in Richtung der Gasseite wird wiederum das Gas auf der Gasseite verdichtet und durch die Druckventile ausgestoßen. Beim Ausfahren des Kolbens wird ein umgekehrter Vorgang ausgelöst. Die Membrane wird aufgrund des beim Ausfahren des Kolbens fallenden Öldrucks in Richtung des Kolbens, also in Richtung der Ölseite, ausgelenkt, wodurch auf der Gasseite das Gas expandiert und weiteres Gas durch die Gassaugventile angesaugt wird.

Membrankompressoren sind allerdings empfindlicher als Kolbenkompressoren, da durch ständiges Einspritzen von Öl, über einen Sekundärölkreislauf, das sogenannte Lecköl des Kolbens ausgeglichen werden muss. Die exakte Menge an Lecköl zu bestimmen ist, wenn überhaupt, nur durch einen unverhältnismäßig hohen Aufwand realisierbar. Dennoch muss die Ölmenge auf der Ölseite so groß sein, dass der Öldruck im vorderen Totpunkt des Kolbens immer größer ist als der Druck auf der Gasseite in diesem Zustand. Ist dies nicht der Fall, kann kein störungsfreier Betrieb des Membrankompressors garantiert werden. Im schlimmsten Fall kann es dabei zur Beschädigung der Membran oder des Kompressors kommen.

Aus diesem Grund sind verschiedene Öldrucküberwachungen bzw. Öldruckmessverfahren entwickelt worden. Aus der Praxis ist ein Verfahren bekannt, bei dem ein Drucktransmitter auf der Ölseite eines Membrankompressors angeordnet ist, wobei der Drucktransmitter mit einer speicherprogrammierbaren Steuerung (SPS) verbunden ist. Bei der Erfassung des Drucks ist es wichtig, dass der bei einem Kolbenhub maximal erreichte Druck aufgenommen wird, da dieser ausschlaggebend für eine korrekte Funktionsweise des Kompressors ist. Da die Zeit, die ein Kolbenhub benötigt, sehr kurz ist, beispielsweise nur etwa 200 - 300 ms beträgt, muss die Steuerung den aktuell vom Drucktransmitter erfassten Druck innerhalb sehr kurzer Zeitabstabstände von wenigen ms verarbeiten können. Nachteilig bei dem aus dem Stand der Technik bekannten Verfahren ist folglich, dass ein schneller Drucktransmitter und eine sehr schnelle SPS verwendet werden müssen, was sich in einem hohen Kostenaufwand für ein solches System widerspiegelt.

Darüber hinaus zeigt die DE 101 38 674 B4 ein Verfahren zur Vermeidung von Havariefällen von Membrankompressoren, bei dem sowohl auf der Ölseite des Membrankopfes als auch in der Gasdruckleitung auf der Gas Austrittseite des Membrankopfes elektronische Druckaufnehmer angeordnet sind. Die Druckaufnehmer sind mit einer elektronischen Auswertung verbunden, wobei die Signale der beiden elektronischen Druckaufnehmer in Relation zueinander gebracht werden. Bei Unterschreitung einer bestimmten Mindestrelation wird eine Signalgebung veranlasst, um einen möglichen Havariefall abzuwenden. Auch bei diesem Verfahren ist eine schnelle Auswertung der Signale notwendig, um innerhalb der diskreten Zeitintervalle, in denen die Messung durchgeführt wird, den maximalen durch den Kolbenhub verursachten Druck zu ermitteln.

Der vorliegenden Erfindung liegt daher die Aufgabe zugrunde, eine Drucküberwachungseinrichtung sowie ein Verfahren zum Betreiben eines Kompressors mit einer Drucküberwachungseinrichtung anzugeben, die genaue Messwerte liefert und dennoch kostensparend realisiert werden kann.

Die Aufgabe ist bei der erfindungsgemäßen Drucküberwachungseinrichtung mit den Merkmalen des Patentanspruchs 1 dadurch gelöst, dass mindestens zwei Rückschlagventile vorhanden sind, die antiparallel in jeweils einem Strömungspfad angeordnet sind, wobei das eine Rückschlagventil in Strömungsrichtung vom Volumen zum Druckaufnehmer und das andere Rückschlagventil in Strömungsrichtung vom Druckaufnehmer zum Volumen sperrt. Außerdem sind mindestens zwei Sperrventile zum Sperren jeweils eines Strömungspfades vorgesehen. Durch die erfindungsgemäße Anordnung der Rückschlag- und der Sperrventile ist es möglich, wahlweise den maximalen erzeugten Druck eines Kolbenhubs oder den minimalen Druck zu erfassen. Beim Einfahren des Kolbens in den Ölraum erhöhen sich sowohl der Öldruck als auch der Gasdruck. Der Druckaufnehmer ist dabei vorzugsweise auf der Ölseite angeordnet, insbesondere bei einem Membrankompressor. Bei einem Kolbenkompressor ist jedoch auch eine Anordnung des Druckaufnehmers auf der Gasseite möglich und sinnvoll, wodurch die Kompressorventile überwacht werden können. Eine Messung mit zwei Druckaufnehmem, jeweils einem sowohl auf der Gas- als auch auf der Ölseite ist ebenfalls denkbar aber nicht notwendig.

Vom Druckaufnehmer wird dabei dadurch der maximale Druck erfasst, weil das Rückschlagventil in Strömungsrichtung vom Druckaufnehmer zum Volumen sperrt. Das heißt das Rückschlagventil ist geöffnet, solange der Druck im Volumen höher ist, als der Druck hinter dem Rückschlagventil in dem ersten Strömungspfad. Bei geöffnetem Sperrventil in diesem Strömungspfad erhöht sich folglich auch der Druck im Strömungspfad, wenn sich der Druck im überwachten Volumen erhöht. Dabei ist das Sperrventil im zweiten Strömungspfad geschlossen. Sinkt der Druck aufgrund der oszillierenden Bewegung des Kolbens wieder ab, ist der Druck im Strömungspfad hinter dem Rückschlagventil höher als im Volumen. Das Rückschlagventil sperrt somit aufgrund der Druckdifferenz den ersten Strömungspfad zwischen dem Volumen und dem Druckaufnehmer automatisch. Der zweite Stömungspfad ist durch das zweite Sperrventil geschlossen. Auf diese Weise registriert der Druckaufnehmer lediglich den maximalen Druck und ändert den Wert nur dann, wenn der Druck im überwachten Volumen, beispielsweise dem Ölraum, größer wird, als der zuletzt gemessene Wert.

Um eine weitere Messung des maximalen Drucks vornehmen zu können, ohne, dass der zuletzt vom Druckaufnehmer erfasste maximale Druck überschritten werden muss, kann der Strömungspfad zur Messung des maximalen Drucks mit dem zugeordneten Sperrventil gesperrt werden, wobei das Sperrventil des anderen Strömungspfades geöffnet ist. Ist der Druck im geöffneten anderen Strömungspfad vor dem Rückschlagventil auf der Seite des Druckaufnehmer höher, als der Druck im Volumen, öffnet das zum Rückschlagventil im ersten Strömungspfad antiparallel angeordnete zweite Rückschlagventil des zweiten Strömungspfades, so dass ein Druckausgleich stattfindet. Der vom Druckaufnehmer gemessene Druck sinkt dabei so weit ab, bis der minimale Druck des Kolbenhubs erreicht ist. Dadurch wird somit der minimale Druck im Volumen gemessen. Bei einer erneuten Druckerhöhung im Volumen sperrt das Rückschlagventil des zweiten Strömungspfades diesen zweiten Strömungspfad. Weiterhin wird das Sperrventil im ersten Strömungspfad wieder geöffnet und das Sperrventil im zweiten Strömungspfad geschlossen, so dass wieder der maximale Druck im Volumen gemessen wird. Auf diese Weise werden folglich die Strömungspfade wechselweise entspannt und mit Druck beaufschlagt, und es kann sowohl der maximale als auch der minimale Druck erfasst werden.

Ein Vorteil der vorliegenden Erfindung ist es, dass auf eine schnelle und damit teure SPS sowie auf einen schnellen Druckaufnehmer verzichtet werden kann, da keine schnelle kontinuierliche Messung durchgeführt werden muss, sondern lediglich entweder der maximale - und letztlich auch relevante - Druck oder der minimale Druck bestimmt wird. Selbst bei sehr kurzen Zeitintervallen von einigen Hundert ms, in denen ein Kolbenhub durchgeführt wird, besteht somit keine Gefahr, den maximalen Druck den ein Kolbenhub verursacht zu verpassen.

Die Anordnung der Sperrventile in den jeweiligen Strömungspfaden kann unterschiedlich ausgestaltet sein. In einer Ausgestaltung der Drucküberwachungseinrichtung ist vorgesehen, dass die Sperrventile jeweils in Strömungsrichtung vom Volumen zum Druckaufnehmer vor dem zugeordneten Rückschlagventil angeordnet sind. In einer anderen Ausgestaltung ist dagegen vorgesehen, dass die Sperrventile jeweils in Strömungsrichtung vom Volumen zum Druckaufnehmer hinter dem zugeordneten Rückschlagventil angeordnet sind. Denkbar wäre auch, dass ein Sperrventil vor einem Rückschlagventil angeordnet ist, während sich das andere Sperrventil hinter dem anderen Rückschlagventil befindet. Die Sperrventile müssen lediglich dafür geeignet sein, den Strömungspfad vom Volumen zum Druckempfänger bzw. vom Druckempfänger zum Volumen zu sperren.

Vorteilhafterweise ist vorgesehen, dass die Sperrventile durch ein 3/2-Wegeventil realisiert sind. Durch das 3/2-Wegeventil vereinfachen sich die Schaltmöglichkeiten der Strömungspfade. Auf diese Weise ist es möglich automatisch nur den ersten Strömungspfad oder nur den zweiten Strömungspfad zu sperren. Sinnvollerweise ist folglich jeweils mindestens ein Strömungspfad geöffnet, damit Messungen durchgeführt werden können. Die Option beide Strömungspfade zu öffnen würde dazu führen, dass der Druckaufnehmer kontinuierlich Signale empfängt, da sowohl eine Druckerhöhung, als auch eine Druckverringerung möglich ist, wenn beide Strömungspfade geöffnet sind. Darüber hinaus führt die Verwendung eines 3/2-Wegeventils auch dazu, dass die Drucküberwachungseinrichtung insgesamt ein relativ kleines Bauvolumen aufweisen kann.

Für eine einfachere Bedienbarkeit der Drucküberwachungseinrichtung ist eine Druckanzeigeeinrichtung vorgesehen, die die von dem Druckaufnehmer gemessen Werte anzeigt. Bei der Druckanzeigeeinrichtung kann es sich vorzugsweise um eine visuelle Anzeige, beispielsweise ein Display handeln, so dass der aktuelle Druckwert schnell und einfach vor Ort abgelesen werden kann. Darüber hinaus ist aber auch eine akustische Anzeige möglich, mit der - zusätzlich - bei Erreichen eines Grenzwertes ein Warnsignal abgegeben wird.

Eine weitere vorteilhafte Ausgestaltung der Erfindung sieht vor, dass eine speicherprogrammierbare Steuerung zur Steuerung und/oder Regelung der Drucküberwachungseinrichtung vorhanden ist. Auf diese Weise können die Sperrventile bzw. das 3/2-Wegeventil automatisch geöffnet und gesperrt und weitere Aktionen für vorbestimmte Ereignisse programmiert werden. Die SPS muss keine besonders kurze Verarbeitungszeit haben, da eine Messung des maximalen und des minimalen Drucks im Abstand von einigen Sekunden in der Regel ausreichend ist.

Die eingangs genannte Aufgabe ist bei einem Verfahren zum Betreiben eines Kompressors mit einer erfindungsgemäßen Drucküberwachungseinrichtung mit den Merkmalen des Patentanspruchs 7 dadurch gelöst, dass die Sperrventile in definierten Intervallen betätigt werden, wobei jeweils das eine Sperrventil geöffnet und das andere Sperrventil gesperrt wird, so dass in Strömungsrichtung vom Volumen zum Druckaufnehmer der maximale Druck im Volumen und in Strömungsrichtung vom Druckaufnehmer zum Volumen der minimale Druck vom Druckaufnehmer erfasst wird. Die Messung des maximalen und des minimalen Drucks kann in nahezu beliebigen Zeitabständen durchgeführt werden und ist insbesondere unabhängig von der Zeit, die ein Kolbenhub benötigt. Innerhalb dieser Zeit, die in der Regel nur einige 100 ms beträgt, durchläuft der Druck sowohl ein Maximum als auch ein Minimum. Die Messungen des maximalen bzw. des minimalen Drucks können jedoch in deutlich größeren Abständen von beispielsweise einigen wenigen Sekunden durchgeführt werden. Um Ressourcen zu sparen sind auch längere Zeitabstände denkbar.

Um ein wirtschaftliches Betreiben von Kolben- und Membrankompressoren zu ermöglichen, werden von Kompressoren und auch von Pumpen in der Regel Kennlinien aufgenommen, die einen Zusammenhang zwischen für den Betrieb relevanten physikalischen Größen, wie beispielsweise die Fördermenge und den Druck liefern. Der Betrieb eines Kompressors erfolgt dabei idealerweise im Bereich der jeweiligen Kennlinie, d. h. bei einer bestimmten Fördermenge mit dem dafür vorgesehenen optimalen Druck. Weicht der Druck zu stark vom Idealwert ab, kann dies an einer Störung oder Beschädigung des Kompressors liegen. Gemäß einer Ausgestaltung des Verfahrens ist daher vorgesehen, dass bei Über- oder Unterschreiten eines jeweils definierten Grenzwertes des maximalen Drucks ein optisches und/oder akustisches Signal ausgegeben wird. Das akustische Signal kann beispielsweise durch einen Warnton realisiert werden. Für eine optische Warnung bieten sich Signalleuchten an. Ebenfalls denkbar ist ein Display, auf dem Fehlermeldungen ausgegeben werden können. Des weiteren ist eine Weiterleitung und Verarbeitung der gemessenen Signale in einem Prozessleitsystem möglich.

Eine weitere Ausgestaltung des Verfahrens sieht vor, dass bei Unter- oder Überschreiten eines jeweils definierten Grenzwertes des minimalen Drucks ein optisches und/oder akustisches Signal ausgegeben wird. Genau wie bei der Warnung vor dem Über- oder Unterschreiten des maximalen Drucks, kann auch eine Warnung für das Unter- oder Überschreiten des mindimalen Drucks ausgegeben werden. Die Warnungen können gleich sein, oder sich voneinander unterscheiden, so dass ein Anwender direkt erkennt, welche Art von Störung vorliegt.

Eine mögliche Änderung im laufenden Betrieb des Kompressors kann auch bereits erkannt werden, bevor ein Grenzwert überschritten oder unterschritten wird. Dafür ist bei einer weiteren Ausgestaltung des Verfahrens vorgesehen, dass der Verlauf der erfassten Werte des maximalen Drucks und/oder der Verlauf der erfassten Werte des minimalen Drucks ermittelt wird. Durch Beobachtung des Verlaufs der jeweiligen Drücke, also des maximalen Drucks und/oder des minimalen Drucks, kann ein Trend des Druckverlaufs erkannt werden. Steigt der maximale Druck beispielsweise mit der Zeit zu stark an oder sinkt der Druck mit der Zeit zu stark ab, können von einem Techniker entsprechende Gegenmaßnahmen ergriffen werden. Ein kontinuierliches Absinken des Öldrucks ist in der Regel ein Anzeichen für einen Verschleiß von Komponenten des Kompressors, insbesondere des Ölüberströmventils oder der Kompensationspumpe. Ein schneller Abfall des Öldrucks kann wiederum ein Anzeichen für ein Funktionsproblem bzw. einen Defekt sein. Beim Erkennen eines Fehlverhaltens durch die Trenderkennung kann der Kompressor somit bereits frühzeitig heruntergefahren werden und dadurch ggf. ein schwerwiegender Defekt oder eine Zerstörung eines Bauteils verhindert werden.

Um die Genauigkeit der Messungen und insbesondere der Trenderkennung zu erhöhen, ist bei einer vorteilhaften Ausgestaltung des erfindungsgemäßen Verfahrens vorgesehen, dass bei einem Abweichen von vorgegebenen Druckverläufen des maximalen Drucks und/oder des minimalen Drucks eine Anpassung der definierten Intervalle vorgenommen wird, in denen die Sperrventile jeweils geöffnet und gesperrt werden. Unter vorgegebenen Druckverläufen ist ein idealer Verlauf des Druckes zu verstehen. Beim Anfahren eines Kompressors wird der Druck zunächst stufenweise aufgebaut, bis der gewünschte Druck erreicht wird. Der maximale Öldruck steigt während des Anfahrens eines Membrankompressors stark an, während Druckmaximum und Druckminimum im laufenden Betrieb nicht zu sehr schwanken sollten. Nimmt das Druckminimum und/oder das Druckmaximum mit der Zeit zu stark ab oder zu, kann dies an einem Fehler in der laufenden Anlage bzw. des Kompressors liegen. In diesem Fall kann es sinnvoll sein, das Intervall der Messungen zu verkürzen, um auf das Erreichen von kritischen Druckwerten schneller reagieren zu können. Ein Techniker kann daraus schließen, dass eine Störung in der Anlage oder am Kompressor vorliegt. Er kann somit reagieren, bevor Beschädigungen des Kompressors oder der gesamten Anlage auftreten.

Im Einzelnen gibt es nun eine Vielzahl von Möglichkeiten, die erfindungsgemäße Drucküberwachungseinrichtung und das erfindungsgemäße Verfahren zum Betreiben eines Membrankompressors auszugestalten und weiterzubilden. Dazu wird verwiesen sowohl auf die den Patentansprüchen 1 und 7 nachgeordneten Patentansprüche, als auch auf die nachfolgende Beschreibung von Ausführungsbeispielen in Verbindung mit der Zeichnung. In der Zeichnung zeigen
- Fig. 1: eine schematische Darstellung einer aus dem Stand der Technik bekannten Drucküberwachungseinrichtung,
- Fig. 2: eine schematische Darstellung eines ersten Ausführungsbeispiels einer Drucküberwachungseinrichtung,
- Fig. 3: eine schematische Darstellung eines weiteren Ausführungsbeispiels einer Drucküberwachungseinrichtung,
- Fig. 4: eine schematische Darstellung eines Ausführungsbeispiels einer Drucküberwachungseinrichtung mit 3/2-Wegeventil und
- Fig. 5: eine vereinfachte Darstellung des Ablaufs einer Messung des maximalen bzw. des minimalen Drucks.

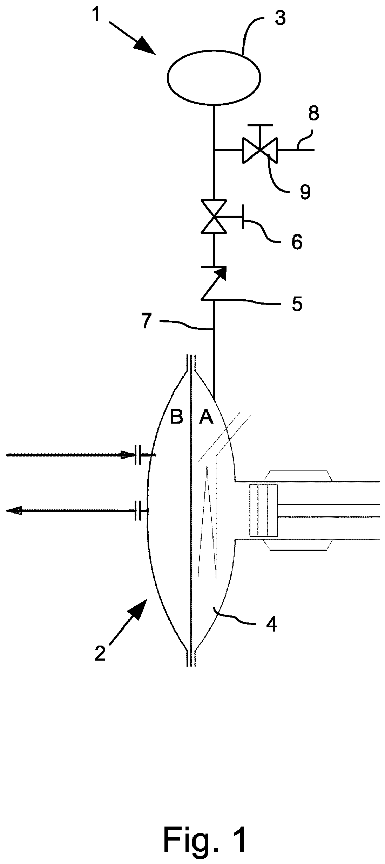

Fig. 1 zeigt eine schematische Darstellung einer aus dem Stand der Technik bekannten Drucküberwachungseinrichtung 1. Die dargestellte Drucküberwachungseinrichtung 1 kann dazu genutzt werden, den Druck in einem Membrankompressor 2 mit einer Ölseite A und einer davon durch eine Membran getrennten Gasseite B zu überwachen. Dazu ist ein Druckaufnehmer 3 vorgesehen, der den Druck in dem Volumen 4 auf der Ölseite A des Membrankompressors 2 misst. Zwischen dem Volumen 4 und dem Druckaufnehmer 3 sind ein Rückschlagventil 5 und ein Sperrventil 6 in dem Strömungspfad 7 vom Volumen 4 zum Druckaufnehmer 3 angeordnet. Hinter dem Sperrventil 6 in Richtung auf den Druckaufnehmer 3 ist eine Abzweigung 8 vorgesehen, in der sich ein weiteres Sperrventil 9 befindet.

Das Rückschlagventil 5 sperrt in Richtung vom Druckaufnehmer 3 zum Volumen 4, das heißt, das Rückschlagventil 5 öffnet in Richtung vom Volumen 4 zum Druckaufnehmer 3. Solange der Druck im Volumen 4 größer ist als der Druck im Strömungspfad 7 hinter dem Rückschlagventil 5, kann ein den Strömungspfad 7 durchströmendes Medium vom Volumen 4 zum Druckaufnehmer 3 strömen. Dadurch erhöht sich der Druck im Strömungspfad 7 und somit auch der vom Druckaufnehmer 3 gemessene Druck. Der Druckaufnehmer 3 misst somit nicht kontinuierlich den im Volumen A anstehenden und sich durch die oszillierende Bewegung des Kolbens ergebenden Druckverlauf, sondern nur den maximalen Druck, wobei sich der vom Druckaufnehmer 3 gemessene Druck erst dann ändert, wenn sich der Druck im Volumen A und damit auch im Strömungspfad 7 weiter erhöht. Verringert sich der Druck im Volumen A, so dass er geringer ist als der Druck im Strömungspfad 7 hinter dem Rückschlagventil 5, dann sperrt das Rückschlagventil 5 den Strömungspfad 7 und der vom Druckaufnehmer 3 gemessene Druck bleibt konstant auf dem zuletzt gemessenen Druckmaximum.

Um eine neue Messung durchführen zu können, wird in einem ersten Schritt das Sperrventil 6 geschlossen. Dadurch ist der Strömungspfad 7 hinter dem Sperrventil 6 gesperrt, wobei der Druck weiterhin auf dem zuletzt gemessenen Druckmaximum konstant bleibt. Wird nun das weitere Sperrventil 9 geöffnet, so kann das im Strömungspfad 7 befindliche Medium durch die Abzweigung 8 abströmen. Im Strömungspfad 7 herrscht anschließend Umgebungsdruck, der auch vom Druckaufnehmer 3 gemessen wird, so dass dieser nicht mehr den vorherigen Maximalwert misst. Anschließend werden die beiden Ventile 6 und 9 in umgekehrter Reihenfolge betätigt, nämlich zunächst das Sperrventil 9 in der Abzweigung 8 geschlossen und dann das Sperrventil 6 im Strömungspfad 7 wieder geöffnet. Dadurch ist der Strömungspfad 7 wieder geöffnet und das Medium kann vom Volumen 4 im Membrankompressor 2 zum Druckaufnehmer 3 strömen, wodurch sich der vom Druckaufnehmer 3 gemessene Druck bei einer Druckerhöhung im Volumen 4 erhöht.

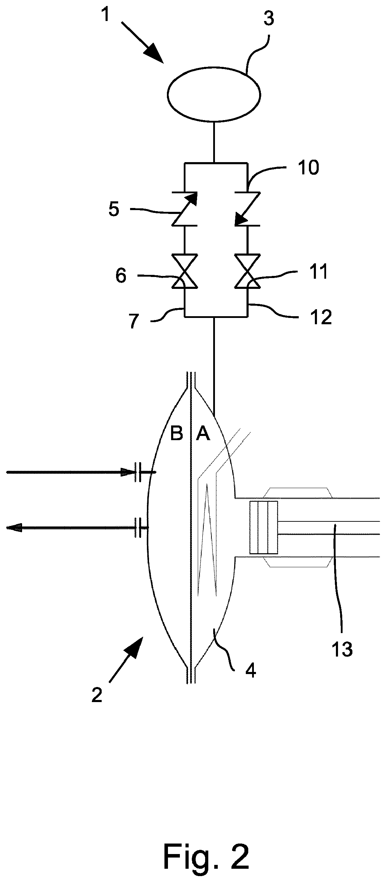

Fig. 2 zeigt ein erstes Ausführungsbeispiel einer erfindungsgemäßen Drucküberwachungseinrichtung 1. Ähnlich wie bei der in Fig. 1 dargestellten, aus dem Stand der Technik bekannten, Drucküberwachungseinrichtung 1 ist ein Druckaufnehmer 3 mit dem Volumen 4, nämlich der Ölseite A, eines Membrankompressors 2 verbunden. In einem ersten Strömungspfad 7 sind ein Rückschlagventil 5 und ein Sperrventil 6 angeordnet, wobei das Sperrventil 5 in Strömungsrichtung vom Druckaufnehmer 3 zum Volumen 4 sperrt, so dass der maximale Druck mit dem Druckaufnehmer 3 gemessen werden kann. Zusätzlich sind bei der in Fig. 2 gezeigten Drucküberwachungseinrichtung 1 ein weiteres Rückschlagventil 10 und ein weiteres Sperrventil 11 in einem zum ersten Strömungspfad 7 parallelen zweiten Strömungspfad 12 angeordnet. Das Rückschlagventil 10 im zweiten Strömungspfad 12 ist antiparallel zum Rückschlagventil 5 im ersten Strömungspfad 7 angeordnet, so dass das Rückschlagventil 10 in Strömungsrichtung vom Volumen 4 zum Druckaufnehmer 3 sperrt.

Die Sperrventile 6 und 11 dienen zur Absperrung der Strömungspfade 7 und 12, so dass immer jeweils ein Strömungspfad 7 oder 12 geöffnet ist. Ist der erste Strömungspfad 7 geöffnet, so kann Medium vom Volumen 4 zum Druckaufnehmer 3 strömen, wodurch vom Druckaufnehmer 3 der maximale Druck im Volumen 4 gemessen werden kann, da das Medium hinter dem Rückschlagventil 5 nicht zurück durch den Strömungspfad 7 in Richtung des Volumens 3 fließen kann. Dieser Weg wird vom Rückschlagventil 5 gesperrt. Ist der zweite Strömungspfad 12 geöffnet, während der erste Strömungspfad 7 durch das Sperrventil 6 gesperrt ist, so kann Medium vom Druckaufnehmer 3 zurück zum Volumen 4 strömen, so lange der Druck im Volumen 4 geringer ist als der am Druckaufnehmer 3 anstehende Druck oberhalb des Rückschlagventils 10. Dadurch kann sich der Druck im Strömungspfad 12 verringern, wenn sich der Druck im Volumen 4 verringert. Hat der Druck im Volumen 4 sein Minimum erreicht, so wird dieser Druck vom Druckaufnehmer 3 gemessen. Erhöht sich der Druck im Volumen 4 aufgrund der oszillierenden Bewegung des Membrankompressors 2 wieder, so sperrt das Rückschlagventil 10 den Strömungspfad 12 und der vom Druckaufnehmer 3 hinter dem Rückschlagventil 10 gemessene Druck bleibt konstant auf dem zuletzt gemessenen minimalen Wert.

Auf diese Weise können durch abwechselndes Betätigen der beiden Sperrventile 6, 11 sowohl der maximale Druck als auch der minimale Druck, der in Abhängigkeit von der Position des Kolbens 13 des Membrankompressors 2 im Volumen 4 ansteht, gemessen werden. Eine kontinuierliche Messung des Drucks im Volumen 4 ist nicht notwendig, da durch die beiden Rückschlagventile 5, 10 der jeweilige Maximalwert bzw. Minimalwert am Druckaufnehmer 3 ansteht. Die vom Druckaufnehmer 3 gemessenen Werte ändern sich lediglich, wenn der zuletzt gemessene maximale Wert überschritten bzw. der zuletzt gemessene minimale Wert unterschritten wurde und somit ein neuer Maximalwert bzw. ein neuer Minimalwert aufgenommen wird. Die beiden Rückschlagventile 5, 10 fungieren dadurch als eine Art Spitzenwertspeicher.

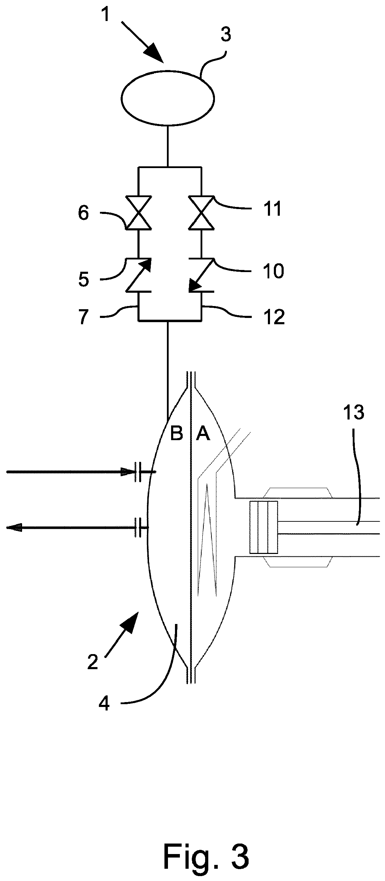

Fig. 3 zeigt eine Ausführungsbeispiel einer Drucküberwachungseinrichtung 1 ähnlich der in Fig. 2 dargestellten Drucküberwachungseinrichtung 1. In diesem Fall wird der Druck allerdings nicht auf der Ölseite A, sondern auf der Gasseite B gemessen. Darüber hinaus sind die Rückschlagventile 5, 10 in Richtung vom Volumen 4, also der Gasseite B des Membrankompressors 2, zum Druckaufnehmer 3 vor den Sperrventilen 6, 11 angeordnet. Die Ventile können in den jeweiligen Strömungspfaden 7, 12 in beliebiger Reihenfolge zueinander angeordnet werden, so lange die einzelnen Strömungspfade 7, 12 unabhängig voneinander gesperrt werden können.

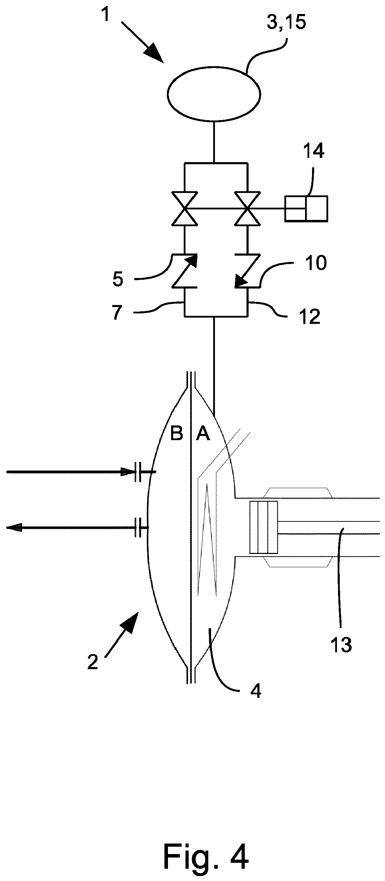

Fig. 4 zeigt ein weiteres Ausführungsbeispiel einer Drucküberwachungseinrichtung 1 ähnlich der in Fig. 3 gezeigten Drucküberwachungseinrichtung 1. Der Druckaufnehmer 3 misst hier wieder den Druck im Volumen 4 auf der Ölseite A des Membrankompressors 2. Anstatt der beiden separaten Sperrventile 6 und 11 wird bei der in Fig. 4 gezeigten Drucküberwachungseinrichtung 1 ein 3/2-Wegeventil 14 verwendet, durch das die beiden Strömungspfade 7, 12 wechselseitig gesperrt bzw. geöffnet werden können. Auf diese Weise kann die Baugröße der Drucküberwachungseinrichtung 1 verringert werden. Außerdem ist eine speicherprogrammierbare Steuerung 15 mit dem Druckaufnehmer 3 verbunden. Dadurch kann der Ablauf der Messung des Drucks bzw. des maximalen und des minimalen Drucks automatisiert werden. Insbesondere können dadurch die Intervalle, in denen das 3/2-Wegeventil umgeschaltet wird, eingestellt oder verändert werden.

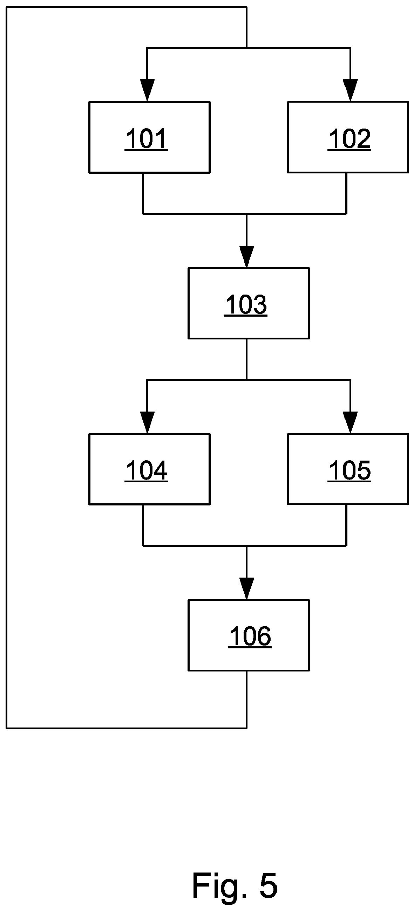

Fig. 5 zeigt eine vereinfachte Darstellung des Ablaufs einer Messung des minimalen bzw. des maximalen Drucks mit einer Drucküberwachungseinrichtung gemäß der Darstellung in Fig. 2. In Schritt 101 wird das Sperrventil 6 geöffnet und in Schritt 102 das Sperrventil 11 geschlossen. Dadurch ist der erste Strömungspfad 7 geöffnet, so dass in Schritt 103 vom Druckaufnehmer 3 der Druck im Volumen 4 gemessen wird, der letztlich dem im Volumen 4 anstehenden maximalen Druck entspricht. Die Messung kann grundsätzlich über eine beliebige Zeitdauer erfolgen, wobei jedoch eine Messung im geringen Sekundenbereich bevorzugt wird. In Schritt 104 wird das Sperrventil 6 geschlossen, wodurch der Strömungspfad 6 gesperrt wird, und in Schritt 105 das Sperrventil 11 geöffnet, so dass der Strömungspfad 12 freigegeben wird. Dadurch kann dann in Schritt 106 mit dem Druckaufnehmer 3 der minimale Druck gemessen werden, wenn sich der Druck im Volumen 4 wieder verringert.

Die Schritte 101 bis 106 können in beliebigen Intervallen über bestimmte Zeiträume wiederholt werden. Bei einer Automatisierung der Messung durch eine speicherprogrammierbare Steuerung 15 können weitere Funktionen eingebracht werden. So können für bestimmte Grenzwerte des maximalen Drucks bzw. des minimalen Drucks Warnungen ausgegeben werden oder beim Über- oder Unterschreiten von Grenzwerten die Intervalle 103 und 106, in denen die Messungen vorgenommen werden, verkürzt oder verlängert werden. Dadurch kann auf vom Druckaufnehmer 3 gemessene Veränderungen des Drucks im überwachten Volumen 4, die nicht dem erwarteten Druckverlauf entsprechen, reagiert werden, wodurch ein Defekt rechtzeitig erkannt werden kann.

## Patentansprüche

1. Drucküberwachungseinrichtung (1), insbesondere für einen Kompressor (2), mit mindestens einem Druckaufnehmer (3) zum Aufnehmen des Drucks innerhalb eines bestimmten Volumens (4), mit mindestens einem Rückschlagventil (5) und mit mindestens einem Sperrventil (6), zum Sperren des Rückschlagventils (5), wobei sich das Sperrventil (6) und das Rückschlagventil (5) jeweils in einem von einem Medium durchströmbaren Strömungspfad (7) zwischen dem Volumen (4) und dem Druckaufnehmer (3) befinden,
**dadurch gekennzeichnet,**
**dass** mindestens zwei Rückschlagventile (5,10) vorhanden sind, die antiparallel in jeweils einem Strömungspfad (7,12) angeordnet sind, dass das erste Rückschlagventil (5) in Strömungsrichtung vom Volumen (4) zum Druckaufnehmer (3) und das zweite Rückschlagventil (10) in Strömungsrichtung vom Druckaufnehmer (3) zum Volumen (4) sperrt und dass mindestens zwei Sperrventile (6,11) zum Sperren jeweils eines Strömungspfades (7,12) angeordnet sind.

2. Drucküberwachungseinrichtung (1) nach Anspruch 1, **dadurch gekennzeichnet, dass** die Sperrventile (6,11) jeweils in Strömungsrichtung vom Volumen (4) zum Druckaufnehmer (3) vor dem zugeordneten Rückschlagventil (5,10) angeordnet sind.

3. Drucküberwachungseinrichtung (1) nach Anspruch 1, **dadurch gekennzeichnet, dass** die Sperrventile (6,11) jeweils in Strömungsrichtung vom Volumen (4) zum Druckaufnehmer (3) hinter dem zugeordneten Rückschlagventil (5,10) angeordnet sind.

4. Drucküberwachungseinrichtung (1) nach einem der Ansprüche 1 bis 3, **dadurch gekennzeichnet, dass** die Sperrventile (6,11) durch ein 3/2-Wegeventil (14) realisiert sind.

5. Drucküberwachungseinrichtung (1) nach einem der Ansprüche 1 bis 4, **dadurch gekennzeichnet, dass** eine Druckanzeigeeinrichtung vorhanden ist, die die von dem Druckaufnehmer (3) gemessenen Werte anzeigt.

6. Drucküberwachungseinrichtung (1) nach einem der Ansprüche 1 bis 5, **dadurch gekennzeichnet, dass** eine speicherprogrammierbare Steuerung (15) zur Steuerung und/oder Regelung der Drucküberwachungseinrichtung (1) vorhanden ist.

7. Verfahren zum Betreiben eines Kompressors (2), mit einer Drucküberwachungseinrichtung (1) nach einem der Ansprüche 1 bis 6,
**dadurch gekennzeichnet,**
**dass** die Sperrventile (6,11) in definierten Intervallen betätigt werden, wobei jeweils das eine Sperrventil (6,11) geöffnet und das andere Sperrventil (6,11) gesperrt wird, so dass in Strömungsrichtung vom Volumen (4) zum Druckaufnehmer (3) der maximale Druck im Volumen (4) und in Strömungsrichtung vom Druckaufnehmer (3) zum Volumen (4) der minimale Druck vom Druckaufnehmer (3) erfasst wird.

8. Verfahren nach Anspruch 7, **dadurch gekennzeichnet, dass** bei Über- oder Unterschreiten eines definierten jeweiligen Grenzwertes des maximalen Drucks ein optisches und/oder akustisches Signal ausgegeben wird.

9. Verfahren nach Anspruch 7 oder 8, **dadurch gekennzeichnet, dass** bei Unter- oder Überschreiten eines definierten jeweiligen Grenzwertes des minimalen Drucks ein optisches und/oder akustisches Signal ausgegeben wird.

10. Verfahren nach einem der Ansprüche 7 bis 9, **dadurch gekennzeichnet, dass** der Verlauf der erfassten Werte des maximalen Drucks und/oder der Verlauf der erfassten Werte des minimalen Drucks ermittelt wird.

11. Verfahren nach Anspruch 10, **dadurch gekennzeichnet, dass** bei Abweichen von vorgegebenen Druckverläufen des maximalen Drucks und/oder bei Abweichen von vorgegebenen Druckverläufen des minimalen Drucks eine Anpassung der definierten Intervalle vorgenommen wird, in denen die Sperrventile jeweils geöffnet und gesperrt werden.

12. Verfahren nach einem der Ansprüche 7 bis 11, **dadurch gekennzeichnet, dass** die vom Druckaufnehmer (3) gemessenen Messwerte in einem Prozessleitsystem weiterverarbeitet werden.
